# EUROPÄISCHE PATENTSCHRIFT

(11) **EP 2 098 566 B1**
(45) Veröffentlichungstag und Bekanntmachung des Hinweises auf die Patenterteilung: **06.08.2014**
(21) Anmeldenummer: 09153844.7
(22) Anmeldetag: 27.02.2009
(51) Int. Cl.: C08L 23/08, C08L 77/00, C08K 5/00, C08K 5/14

(54) **Vernetzbare Zusammensetzungen, daraus erhältliche thermoplastische Elastomere und deren Verwendung**
Networkable compounds, thermoplastic elastomers derived from same and use thereof
Compositions pouvant être mises en réseau, élastomères thermoplastiques ainsi obtenues et leur utilisation

(30) Priorität: 04.03.2008 DE 102008012526; 18.08.2008 DE 102008038279
(43) Veröffentlichungstag der Anmeldung: 09.09.2009
(73) Patentinhaber: LANXESS Deutschland GmbH, 50569 Köln (DE)
(72) Erfinder: Varnhorn, Kay, 51375 Leverkusen (DE); Mertikat, Jörg, 83024 Rosenheim (DE)

(56) Entgegenhaltungen:
- EP-A- 0 865 086
- EP-A- 1 669 395
- EP-A- 1 743 918
- EP-A- 1 801 162
- DE-A1- 4 425 944

## Beschreibung

Die vorliegende Erfindung betrifft vernetzbare Zusammensetzungen auf der Basis von Polyamid und α-Olefin-Vinylacetat-Copolymeren, wobei die Zusammensetzungen einen Vernetzungsinitiator sowie einen Covernetzer enthalten, bzw. vernetzbare Zusammensetzungen auf Basis von Polyamiden und α-Olefin-Vinylacetat-Copolymeren, wobei diese Zusammensetzungen einen Vernetzungsinitiator enthalten und die Menge an Polyamid in den Zusammensetzungen < 30 Gew.-% beträgt. Des Weiteren betrifft die vorliegende Erfindung die Herstellung der erfindungsgemäßen vernetzbaren Zusammensetzungen, die Verwendung der erfindungsgemäßen vernetzbaren Zusammensetzungen zur Herstellung von thermoplastischen Elastomeren, ein Verfahren zur Vernetzung der erfindungsgemäßen Zusammensetzungen unter Erhalt eines thermoplastischen Elastomers sowie die thermoplastischen Elastomere selbst und deren Verwendung zur Herstellung von Formteilen.

Klassisch werden in der Kunststofftechnik drei wesentliche Werkstoffklassen unterschieden, nämlich Thermoplaste, Elastomere und Duromere. In den letzten Jahren hat eine weitere Klasse von Werkstoffen, die thermoplastischen Elastomere, immer neue Anwendungen gefunden. Thermoplastische Elastomere kombinieren die Verarbeitungseigenschaften von Thermoplasten mit den Gebrauchseigenschaften von Elastomeren. Dem Fachmann sind verschiedene Klassen (so genannter) thermoplastischer Elastomere bekannt. Dabei kann man zwei Hauptklassen unterscheiden, nämlich Blockcopolymere (auch Multiblockcopolymere) und Elastomerlegierungen.

Die Blockcopolymere sind aus einer harten und einer weichelastischen Phase aufgebaut. Meist bilden die Weichphasen die Matrix und die Hartphasen liegen als disperse Phase vor, die wie ein vernetzender/verstärkender Füllstoff wirkt. Die Vernetzungsbereiche werden durch physikalische Bindungen zwischen den Hartsegmenten gebildet. Die Blockcopolymere verhalten sich innerhalb der Gebrauchstemperaturen wie vernetzte Elastomere, wenn die Umwandlungstemperatur der Hartsegmente deutlich über und die der Weichsegmente deutlich unter der Gebrauchstemperatur liegen und zusätzlich die Mischungsanteile in einem richtigen Verhältnis zueinander stehen.

Elastomerlegierungen sind Polymerblends, die Thermoplast- und Elastomeranteile enthalten. Die Herstellung erfolgt durch intensives Vermischen der Ausgangskomponenten, wobei Vernetzungsmittel zugesetzt werden können. Wird die Weichphase (teilweise) vernetzt, spricht man von TPE-V (thermoplastische Vulkanisate). Liegt die Weichphase unvernetzt vor, spricht man von TPE-O.

Die vorliegende Erfindung betrifft thermoplastische Elastomere vom Typ TPE-V. Dabei wird als Thermoplast mindestens ein Polyamid eingesetzt.

TPE-V, die als Thermoplasten mindestens ein Polyamid aufweisen, sind im Stand der Technik bekannt. So betrifft EP 1 801 162 A1 Polyamid-EVA-Mischungen, die 30 bis 80 Gew.-% eines Polyamids als thermoplastische Matrix aufweisen und eine an die thermoplastische Matrix angebundene vernetzte disperse Elastomerphase enthaltend 10 bis 69 Gew.-% eines EthylenCopolymers sowie 1 bis 10 Gew.-% eines Verträglichkeitsvermittlers, ausgewählt aus den mittels Pfropfung von α,β-ethylenisch ungesättigten Mono- und/oder Dicarbonsäuren bzw. deren Derivaten auf ein Ethylen-Copolymer-Polymerrückrad erhaltenen Verbindungen, jeweils bezogen auf die Formmasse. Gemäß EP 1 801 162 A1 sollen thermoplastische Formmassen bereitgestellt werden, die in Bezug auf ihre physikalischen Eigenschaften, insbesondere in Bezug auf die Ölquellung, gute Eigenschaften aufweisen, ohne nachteilige Beeinflussung der Schlagzähigkeit, Bruchspannung, E-Modul und Bruchdehnung der Formmasse. Dies wird gemäß EP 1 801 162 A1 dadurch erreicht, dass 1 bis 10 Gew.-% eines speziellen Verträglichkeitsvermittlers eingesetzt werden. EP 1 801 162 A1 ist zu entnehmen, dass neuartige thermoplastische Formmassen bereitgestellt werden, die einen hohen Anteil an Polyamid, nämlich 30 bis 80 Gew.-%, bevorzugt 40 bis 60 Gew.-%, besonders bevorzugt 45 bis 55 Gew.-% aufweisen. Reversible elastische Eigenschaften, wie das Rückstellverhalten nach Dehnung oder der Druckverformungsrest wie sie für elastomere Werkstoffe entscheidend sind, sind nicht beschrieben.

US 4,197,379 betrifft elastoplastische Zusammensetzungen aufgebaut aus einem Kautschuk und Polyamid. Die Zusammensetzungen weisen bis zu 50 Gew.-% eines thermoplastischen, kristallinen Polyamids und bis zu 80 Gew.-% eines Kautschuks, bevorzugt eines Nitrilkautschuks, auf. Wesentlich ist gemäß US 4,197,379, dass thermoplastische Elastomere bereitgestellt werden, die im Wesentlichen frei von Phenolweichmachern mit niedrigem Molekulargewicht sind. Der Einsatz von α-Olefin-Vinylacetat-Copolymeren als Elastomerkomponente ist in US 4,197,379 nicht erwähnt.

US 5,270,377 betrifft Polyamid, das mit einem speziellen, teilweise vernetzten gepfropften Polyolefin-Elastomer vermischt ist. Gemäß US 5,270,377 sollen Zusammensetzungen bereitgestellt werden, die eine gute Ölbeständigkeit, mechanische Festigkeit und Hitzebeständigkeit aufweisen, in dem Fall, wenn die Elastomerkomponente die Hauptkomponente darstellt, und die eine hervorragende Schlagzähigkeit, Steifigkeit und Zugfestigkeit aufweisen, wenn die Polyamidkomponente die Hauptkomponente ist. Der Einsatz von α-Olefin-Vinylacetat-Copolymeren als Elastomerkomponente ist in US 5,270,377 nicht erwähnt.

DE 44 25 944 betrifft thermoplastische Elastomer-Zusammensetzungen, die 5 bis 60 Gew.-% einer thermoplastischen Phase aufweisen, wobei der Thermoplast unter anderem ein Polyamid sein kann, und 40 bis 95 Gew.-% eines vernetzten Ethylen-Vinylester-Mischpolymerisats oder eines vernetzten gepfropften Ethylen-Vinylester-Pfropfcopolymerisats enthalten. Gemäß DE 44 25 944 werden die thermoplastischen Elastomer-Zusammensetzungen dadurch hergestellt, dass der Thermoplast mit bereits vernetztem Ethylen-Vinylester-Polymerisat vermischt wird. Es findet keine dynamische Vernetzung der Elastomerkomponente während der Mischung mit der Thermoplastkomponente statt.

Aufgabe der vorliegenden Erfindung ist es, gegenüber den im Stand der Technik bekannten thermoplastischen Elastomeren thermoplastische Elastomere bereitzustellen, die sich durch ein gummiähnliches Eigenschaftsprofil auszeichnen. Das bedeutet, dass thermoplastische Elastomere bzw. Zusammensetzungen zur Herstellung von thermoplastischen Elastomeren bereitgestellt werden sollen, die sehr gute Rückstelleigenschaften, einen guten Zugverformungsrest, einen guten Druckverformungsrest, sehr gute Temperatur- und Medienbeständigkeiten und einen niedrigen Härtebereich (Shore Härte A) aufweisen. Die thermoplastischen Elastomere sollen durch beliebige Verarbeitungstechniken wie Extrusion, Spritzguss, aber auch Blasformen verarbeitet werden können.

Bei den bisher bekannten thermoplastischen Elastomeren ist es nicht möglich eine Eigenschaftskombination von niedriger Härte, guten elastischen Eigenschaften, schnellem Rückstellverhalten bei gleichzeitiger Medienbeständigkeit und Temperaturbeständigkeit zu erreichen. Bei den bisher bekannten thermoplastischen Elastomeren ist es entweder möglich, gute elastische Eigenschaften oder gute Temperaturbeständigkeiten zu erreichen, wobei jedoch die Medienbeständigkeiten (insbesondere die Langzeit-Medienbeständigkeiten) verbesserungswürdig sind, oder gute Medienbeständigkeiten zu erreichen, wobei die Temperaturbeständigkeiten verbesserungswürdig sind. Thermoplastische Elastomere, die hohe Temperaturbeständigkeiten und gute Medienbeständigkeiten aufweisen, beispielsweise TPE-A (Polyetheramide), TPE-E (Polyetherester) und TPE-U (TPU, Polyurethane), stehen lediglich für Anwendungen im (hohen) Härtebereich Shore D in einem hohen Preissegment zur Verfügung und weisen moderate elastische Eigenschaften auf. Bisher bekannte Materialen der Klasse der thermoplastischen Elastomere (thermoplastischen Vulkanisate) TPE-V konnten das vorstehend erwähnte Anforderungsprofil bisher noch nicht erfüllen.

Die Aufgabe wird gelöst durch die Bereitstellung von vernetzbaren Zusammensetzungen enthaltend
a) 10 bis < 30 Gew.-%, bevorzugt 10 bis 25 Gew.-% mindestens eines Polyamids als Komponente A;
b) > 50 bis 90 Gew.-%, bevorzugt 60 bis 89,5 Gew.-% mindestens eines α-Olefin-Vinylacetat-Copolymers als Komponente B;
c) 0 bis 20 Gew.-%, bevorzugt 0,5 bis 15 Gew.-% Füllmaterialien, Weichmacher, Additive und/oder Zusatzstoffe als Komponente C;
   wobei die Summe der Komponenten A, B und C 100 **Gew.-%** ergibt,
   und
d) 0,2 bis 10 Gew.-Teile pro 100 Gew.-Teile des α-Olefin-Vinylacetat-Copolymers (phr), bevorzugt 1 bis 6 phr, besonders bevorzugt 1,5 bis 6 phr mindestens eines radikalischen Vernetzungsinitiators als Komponente D; und
e) 0 bis 10 Gew.-Teile pro 100 Gew.-Teile des α-Olefin-Vinylacetat-Copolymers (phr), bevorzugt 1 bis 6 phr mindestens eines Covernetzers als Komponente E.

Die erfindungsgemäßen Zusammensetzungen sind zur Herstellung von thermoplastischen Elastomeren geeignet, die sich neben einer hervorragenden Temperatur- und Medienbeständigkeit insbesondere durch sehr gute elastische Eigenschaften in einem weiten Härtebereich auszeichnen.

Besonders geeignete erfindungsgemäße Zusammensetzungen weisen z. B. einen Zugverformungsrest bei Raumtemperatur; Dehnung (100 %) von < 40 %, einen Zugverformungsrest bei 100°C; Dehnung (50 %) von < 80 %; eine Quellung bei 24 h Lagerung in Motoröl von < 10 % und einen Härtebereich (Shore Härte A) von 50- 90 auf (geeignete Messmethoden sind in den nachstehenden Beispielen genannt).

Wesentlich in den genannten vernetzbaren Zusammensetzungen ist, dass diese einen hohen Anteil des α-Olefin-Vinylacetat-Copolymers (Komponente B) im Verhältnis zu dem mindestens einen Polyamid (Komponente A) aufweisen. Diese Zusammensetzungen zeichnen sich daher - ebenso wie die erstgenannten Zusammensetzungen - durch eine sehr gute Temperatur- und Medienbeständigkeit sowie insbesondere durch gleichzeitig hervorragende reversible elastische Eigenschaften in einem niedrigen Härtebereich (Shore A Härte) aus.

Aus den erfindungsgemäßen Zusammensetzungen hergestellte thermoplastische Elastomere können mittels Extrusion, Spritzgießen oder auch mittels Blasformen verarbeitet werden.

### Komponente A: mindestens ein Polyamid.

In der Ausführungsform gemäß der vorliegenden Erfindung enthalten die erfindungsgemäßen vernetzbaren Zusammensetzungen 10 bis < 30 Gew.-%, bevorzugt 10 bis 25 Gew.-% mindestens eines Polyamids als Komponente A, bezogen auf die Summe der Komponenten A, B und C.

Als Komponente A geeignete Polyamide sind Homo- oder Copolymere, die Monomerbausteine in der Polymerhauptkette enthalten, die über Amidbindungen (-C(=O)-NH-) verknüpft sind. Bevorzugt werden Polyamide basierend auf C₆-C₁₂-Lactamen oder ω-Aminocarbonsäuren mit 4 bis 18 Kohlenstoffatomen, bevorzugt 6 bis 12 Kohlenstoffatomen, oder ein Polykondensat verwendet, erhältlich aus der Polykondensation mindestens eines Diamins aus der Gruppe bestehend aus aliphatischen Diaminen mit 4 bis 18 Kohlenstoffatomen und cycloaliphatischen Diaminen mit 7 bis 22 Kohlenstoffatomen, mit mindestens einer Dicarbonsäure ausgewählt aus der Gruppe bestehend aus aliphatischen Dicarbonsäuren mit 4 bis 44 Kohlenstoffatomen, cycloaliphatischen Dicarbonsäuren mit 8 bis 24 Kohlenstoffatomen und aromatischen Dicarbonsäuren mit 8 bis 20 Kohlenstoffatomen.

Als ω-Aminocarbonsäuren oder Lactame sind ε-Aminocapronsäure, 11-Aminoundecansäure, 12-Aminododecansäure, ε-Caprolactam, Enantholactam und Laurinlactam sowie Mischungen davon geeignet. Geeignete Diamine, die mit einer Dicarbonsäure kombiniert werden können, sind zum Beispiel 2,2,4- oder 2,4,4-Trimethylhexamethylendiamin, 1,3- oder 1,4-Bis(aminomethyl)cyclohexan, Bis(3-methyl-4-aminocyclohexyl)methan, Bis(aminocyclohexyl)methan, m- oder p-Xylylendiamin, 1,4-Diaminobutan, 1,5-Diamino-2-methylpentan, 1 , 6-Diaminohexan, 1,8-Diaminooctan, 1,9-Diaminononan, 2-Methyl-1,8-diaminooctan, 1,10-Diaminodecan und 1,12-Diaminododecan. Geeignete Dicarbonsäuren sind Bernsteinsäure, Glutarsäure, Adipinsäure, Suberinsäure, Pimelinsäure, Korksäure, Azelainsäure, Sebacinsäure, Dodecandicarbonsäure, Octadecandicarbonsäure, 4-Cyclohexan-dicarbonsäure, Terephthalsäure, Isophthalsäure und Naphthalincarbonsäuren.

Unter Polyamiden im Sinne der vorliegenden Erfindung sind auch Polyamid-Blockcopolymere zu verstehen, die Polyester-, Polyether-, Polysiloxan-, Polycarbonat-, Polyacrylat-, Polymethacrylat- und/oder Polyolefinsegmente als weitere Komponenten neben Polyamid-Bausteinen enthalten. Der Anteil an Polyamid-Bausteinen in den Polyamiden gemäß der vorliegenden Erfindung beträgt im Allgemeinen mindestens 20 Gew.-%. Beispiele für Polyamid-Blockcopolymere sind Polyetheramide, Polyetheresteramide sowie Polyesteramide.

Besonders bevorzugte Polyamide sind ausgewählt aus der Gruppe bestehend aus Polycaprolactam (Nylon-6), Polylaurolactam (Nylon-12), Polyhexamethylenadipamid (Nylon-6,6), Polyhexamethylenazelamid (Nylon-6,9), Polyhexamethylensebacamid (Nylon-6,10), Polyhexamethylenisophthalamid (Nylon-6,IP), Polyaminoundecansäure (Nylon-11), Polytetramethylenadipamid (Nylon-4,6) sowie Copolymere von Caprolactam, Hexamethylendiamin und Adipinsäure (Nylon-6,66) und Aramide wie Polyparaphenylenterephthalamid.

Bevorzugte Polyamide haben Erweichungspunkte bzw. Schmelzpunkte im Bereich von 120 bis 320 °C, bevorzugt im Bereich von 180 bis 300 °C, besonders bevorzugt im Bereich von 200 bis 280 °C. Um thermoplastische Elastomere zu erhalten, die bei besonders hohen Temperaturen eingesetzt werden können, ist es bevorzugt, Polyamide als Komponente A einzusetzen, die hohe Schmelz- bzw. Erweichungspunkte haben. Des Weiteren sind die Polyamide bevorzugt und sind kristallin bzw. teilkristallin.

Bei der Komponente A in den erfindungsgemäßen vernetzbaren Zusammensetzungen kann es sich um ein Polyamid oder eine Mischung aus zwei oder mehreren verschiedenen Polyamiden handeln.

Die als Komponente A in den erfindungsgemäßen vernetzbaren Zusammensetzungen geeigneten Polyamide können gemäß dem Fachmann bekannten Verfahren hergestellt werden bzw. sind kommerziell erhältlich.

### Komponente B (α-Olefin-Vinylacetat-Copolymer)

In den erfindungsgemäßen Zusammensetzungen wird die Komponente B in einer Menge von > 50 bis 90 Gew.-%, bevorzugt 60 bis 89,5 Gew.-%, bezogen auf die Summe der Komponenten A, B und C eingesetzt.

Die erfindungsgemäß bevorzugt eingesetzten α-Olefin-Vinylacetat-Copolymere zeichnen sich durch hohe Vinylacetat-Gehalte von ≥ 40 Gew.-%, bezogen auf das Gesamtgewicht des α-Olefin-Vinylacetat-Copolymeren, bevorzugt durch Vinylacetatgehalte von ≥ 50 Gew.-%, jeweils bezogen auf das Gesamtgewicht der α-Olefin-Vinylacetat-Copolymere, aus. Üblicherweise beträgt der Vinylacetat-Gehalt der erfindungsgemäß eingesetzten α-Olefin-Vinylacetat-Copolymere ≥ 40 Gew.-% bis 98 Gew.-%, bevorzugt ≥ 50 Gew.-% bis 98 Gew.-% und der α-Olefin-Gehalt 2 Gew.-% bis ≤ 60 Gew.-%, bevorzugt 2 Gew.-% bis ≤ 50 Gew.-%, wobei die Gesamtmenge an Vinylacetat und α-Olefin 100 Gew.-% beträgt.

Das erfindungsgemäß eingesetzte α-Olefin-Vinylacetat-Copolymer kann neben den auf dem α-Olefin und Vinylacetat basierenden Monomereinheiten eine oder mehrere weitere Comonomereinheiten aufweisen (z.B. Terpolymere), z.B. basierend auf Vinylestern und/oder (Meth)acrylaten. Die weiteren Comonomereinheiten sind - wenn überhaupt weitere Comonomereinheiten in dem α-Olefin-Vinylacetat-Copolymer vorliegen - in einem Anteil von bis zu 10 Gew.-%, bezogen auf das Gesamtgewicht des α-Olefin-Vinylacetat-Copolymeren vorhanden, wobei sich der Anteil der auf dem α-Olefin basierenden Monomereinheiten auf entsprechend verringert. Somit können z.B. α-Olefin-Vinylacetat-Copolymere eingesetzt werden, die aus ≥ 40 Gew.-% bis 98 Gew.-% Vinylacetat, 2 Gew.-% bis ≤ 60 Gew.-% α-Olefin und 0 bis 10 Gew.-% mindestens eines weiteren Comonomeren aufgebaut sind, wobei die Gesamtmenge an Vinylacetat, α-Olefin und dem weiteren Comonomeren 100 Gew.-% beträgt.

Als α-Olefine können in den erfindungsgemäß eingesetzten α-Olefin-Vinylacetat-Copolymeren alle bekannten α-Olefine eingesetzt werden. Bevorzugt ist das α-Olefin ausgewählt aus Ethen, Propen, Buten, insbesondere n-Buten und i-Buten, Penten, Hexen, insbesondere 1-Hexen, Hepten, insbesondere 1-Hepten, und Octen, insbesondere 1-Octen. Es können auch höhere Homologe der genannten α-Olefine als α-Olefine in den erfindungsgemäß eingesetzten α-Olefin-Vinylacetat-Copolymeren eingesetzt werden. Die α-Olefine können des Weiteren Substituenten tragen, insbesondere C₁-C₅-Alkylreste. Bevorzugt tragen die α-Olefine jedoch keine weiteren Substituenten. Des Weiteren ist es möglich, in den erfindungsgemäß eingesetzten α-Olefin-Vinylacetat-Copolymeren Mischungen zweier oder mehrerer verschiedener α-Olefine einzusetzen. Bevorzugt ist es jedoch, keine Mischungen verschiedener α-Olefine einzusetzen. Bevorzugte α-Olefine sind Ethen und Propen, wobei Ethen besonders bevorzugt als α-Olefin in den erfindungsgemäß eingesetzten α-Olefin-Vinylacetat-Copolymeren eingesetzt wird. Somit handelt es sich bei dem bevorzugt in den erfindungsgemäßen vernetzbaren Zusammensetzungen eingesetzten α-Olefin-Vinylacetat-Copolymer um ein Ethylen-Vinylacetat-Copolymer.

Besonders bevorzugte Ethylen-Vinylacetat-Copolymere weisen einen Vinylacetat-Gehalt von ≥ 40 Gew.-% bis 98 Gew.-%, bevorzugt ≥ 50 Gew.-% bis 98 Gew.-% und einen Ethylen-Gehalt von 2 Gew.-% bis ≤ 60 Gew.-%, bevorzugt 2 Gew.-% bis ≤ 50 Gew.-%, wobei die Gesamtmenge an Vinylacetat und Ethylen 100 Gew.-% beträgt.

Das erfindungsgemäß eingesetzte α-Olefin-Vinylacetat-Copolymer, bevorzugt Ethylen-Vinylacetat-Copolymer, wird bevorzugt nach einem Lösungspolymerisations-Verfahren bei einem Druck von 100 bis 700 bar, bevorzugt bei einem Druck von 100 bis 400 bar, hergestellt. Das Lösungspolymerisations-Verfahren wird bevorzugt bei Temperaturen von 50 bis 150 °C durchgeführt, wobei im Allgemeinen radikalische Initiatoren verwendet werden.

Üblicherweise werden die erfindungsgemäß bevorzugt eingesetzten Ethylen-Vinylacetat-Copolymere mit hohen Vinylacetat-Gehalten als EVM-Copolymere bezeichnet, wobei das "M" in der Bezeichnung das gesättigte Rückgrat der Methylen-Hauptkette des EVMs andeutet.

Geeignete Herstellungsverfahren für die erfindungsgemäß eingesetzten α-Olefin-Vinylacetat-Copolymere sind zum Beispiel in EP-A 0 341 499, EP-A 0 510 478 und DE-A 38 25 450 genannt.

Die erfindungsgemäß bevorzugt eingesetzten α-Olefin-Vinylacetat-Copolymere mit hohen Vinylacetat-Gehalten, die nach dem Lösungspolymerisations-Verfahren bei einem Druck von 100 bis 700 bar hergestellt werden, zeichnen sich insbesondere durch niedrige Verzweigungsgrade und niedrige Viskositäten aus. Des Weiteren weisen die erfindungsgemäß eingesetzten α-Olefin-Vinylacetat-Copolymere eine statistisch gleichmäßige Verteilung ihrer Bausteine (α-Olefin und Vinylacetat) auf.

Die erfindungsgemäß verwendeten α-Olefin-Vinylacetat-Copolymere, bevorzugt Ethylen-Vinylacetat-Copolymere, weisen im Allgemeinen MFI-Werte (g/10 min), gemessen nach ISO 1133 bei 190 °C und einer Last von 21,1 N, von 1 bis 40, bevorzugt 1 bis 10, besonders bevorzugt 2 bis 6.

Die Mooney-Viskositäten gemäß DIN 53 523 ML 1+4 bei 100 °C betragen im Allgemeinen 3 bis 50, bevorzugt 4 bis 35 Mooney-Einheiten.

Besonders bevorzugt werden in den erfindungsgemäßen vernetzbaren Zusammensetzungen Ethylen-Vinylacetat-Copolymere eingesetzt, die zum Beispiel unter den Handelnamen Levapren^{®} oder Levamelt^{®} der Lanxess Deutschland GmbH kommerziell erhältlich sind.

Besonders bevorzugt eingesetzte α-Olefin-Copolymerisate sind die Ethylen-Vinylacetat-Copolymere Levamelt^{®} 400, Levamelt^{®} 450, Levamelt^{®} 452, Levamelt^{®} 456, Levamelt^{®} 500, Levamelt^{®} 600, Levamelt^{®} 700, Levamelt^{®} 800 und Levamelt^{®} 900 mit 60±1,5 Gew.-% Vinylacetat, 70±1,5 Gew.-% Vinylacetat, 80±2 Gew.-% Vinylacetat bzw. 90±2 Gew.-% Vinylacetat, bzw. die entsprechenden Levapren^{®}-Typen.

In den erfindungsgemäßen vernetzbaren Zusammensetzungen kann als Komponente B ein α-Olefin-Vinylacetat-Copolymer eingesetzt werden, es ist jedoch ebenfalls möglich, Mischungen aus zwei oder mehr α-Olefin-Vinylacetat-Copolymeren einzusetzen.

### Komponente C (Füllmaterialien, Weichmacher, Additive und/oder Zusatzstoffe)

Die vernetzbaren Zusammensetzungen können 0 bis 30 Gew.-%, bevorzugt 0,5 bis 20 Gew.-%, bezogen auf die Summe der Komponenten A, B und C, Füllmaterialien, Weichmacher, Additive und/oder Zusatzstoffe als Komponente C enthalten.

Geeignete Füllmaterialien, Weichmacher, Additive und/oder Zusatzstoffe sind dem Fachmann grundsätzlich bekannt. Beispiele für geeignete Füllmaterialien, Weichmacher, Additive sowie Zusatzstoffe sind im Folgenden genannt:

### Füllmaterialien (Füllstoffe)

Geeignete Füllmaterialien sind z.B. Ruß, Kreide (Calciumcarbonat), Kaolin, Kieselerde, Talkum (Magnesiumsilikat), Aluminiumoxid-Hydrat, Aluminiumsilikat, Calciumcarbonat, Magnesiumcarbonat, Calciumsilikat, Magnesiumsilikat, Bariumsulfat, Zinkcarbonat, Kaolin calciniert (z.B. Polestar^{®} 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z.B. Aerosil^{®} 972), synthetische, amorphe Fällungskieselsäure (Silica), Industrieruß, Graphit, nanoskalige Füllstoffe wie Kohlenstoff-Nanofibrillen, Nanoteilchen in Plättchenform oder nanoskaliges Siliciumdioxid-Hydrate und Mineralien.

### Weichmacher

Geeignete Weichmacher sind z.B. Esterweichmacher, z.B. Phthalsäureester wie Dioctylphthalat, Diisooctylphthalat, Dinonylphthalat, Diisodecylphthalat; aliphatische Ester wie Dioctyladipinsäureester, Dioctylsebacinsäureester; Phosphorsäureester wie Trikresylphosphorsäureester, Diphenylkresylsäureester, Trioctylphosphat; Polyester wie Polyphthalsäureester, Polyadipinsäureester, Polyesterether (z.B. ADK Cizer RZ-700, ADK Cizer RZ-750) und Trimellitate (z.B. BISOFLEX^{®} T810T).

### Additive und Zusatzstoffe

Geeignete Additive und Zusatzstoffe sind z.B. Verarbeitungshilfsstoffe, Metallseifen, Fettsäuren und Fettsäurenderivate, Faktis (kautschukähnlicher Stoff, der z. B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z. B. Polycarbodiimide (z.B. Rhenogran®PCD-50), substituierte Phenole, substituierte Bisphenole, Dihydrochinoline, Diphenylamine, Phenyl-Naphthylamine, Paraphenylendiamine, Benzimidazole, Paraffinwachse, mikrokristalline Wachse, Pigmente, Farbstoffe wie Titandioxid, Lithopone, Zinkoxid, Eisenoxid, Ultramarinblau, Chromoxid, Antimonsulfid; Stabilisatoren wie Wärmestabilisatoren, Stabilisatoren gegen Bewitterung; Oxidationsschutzmittel, z. B. p-Dicumyldiphenylamin (z.B. Naugard^{®} 445), styrolisiertes Diphenylamin (z.B. Vulcanox^{®} DDA), Zink-Salz von Methylmercaptobenzimidazol (z.B. Vulcanox^{®} ZMB2), polymerisiertes 1,2-Dihydro-2,2,4-trimethylchinolin (z.B. Vulcanox^{®} HS ), Thiodiethylen-bis(3,5-di-tert.-butyl-4-hydroxy)hydrocinnamat, Thiodiethylenbis[3-(3,5-di-tert-butyl-4-hydroxyphenyl)propionat] (z.B. Irganox^{®} 1035), Gleitmittel, Entformungsmittel, Antiflammmittel (Flammschutzmittel), Haftvermittler, Markierungsstoffe, Mineralien sowie Kristallisationsbeschleuniger und - verzögerer.

### Komponente D (radikalischer Vernetzungsinitiator)

Die erfindungsgemäßen vernetzbaren Zusammensetzungen enthalten des Weiteren 0,2 bis 10 Gew.-Teile pro 100 Gew.-Teile des α-Olefin-Vinylacetat-Copolymers (Komponente B) (phr), bevorzugt 1 bis 6 phr, besonders bevorzugt 1,5 bis 6 phr mindestens eines radikalischen Vernetzungsinitiators als Komponente D.

Für eine radikalische Vernetzung, die die gewünschten gummielastischen Eigenschaften der aus den erfindungsgemäßen Zusammensetzungen erhältlichen thermoplastischen Elastomere aufbaut, sind hohe Dosierungen an radikalischem Vernetzungsinitiator besonders bevorzugt, um hohe Vernetzungsgrade zu erzielen. Während eine Ölquellung von thermoplastischen Formmassen bereits bei niedrigen Vernetzungsgraden und damit geringen Mengen an radikalischem Vernetzungsinitiator bzw. ohne Einsatz eines Covernetzers erzielt werden können, werden erfindungsgemäße thermoplastische Elastomere mit besonders guten Elastomereigenschaften dann erhalten, wenn größere Mengen mindestens eines radikalischen Vernetzers und/oder mindestens ein radikalischer Vernetzer gemeinsam mit einem Covernetzer vorliegen.

Geeignete radikalische Vernetzungsinitiatoren sind dem Fachmann bekannt. Beispiele für geeignete Vernetzungsinitiatoren sind organische Peroxide, z.B. Alkyl- und Arylperoxide, Alkyl-Persäureester, Aryl-Persäureester, Diacyl-peroxide, polyvalente Peroxide wie 2,5-Dimethyl-2,5-di(tert-butylperoxy)hexin-3, (z.B. Trigonox^{®} 145-E85, Trigonox^{®} 145-45B), Di-tert-butyl peroxid, (z.B. Trigonox^{®} B), 2,5-Dimethyl-2,5-di(tert-butylperoxy)hexin, (z.B. Trigonox^{®} 101), tert-Butyl cumyl peroxid (z.B. Trigonox^{®} T), Di(tert-butylperoxyisopropyl)benzol (z.B. Perkadox^{®} 14-40), Dicumyl peroxid (z.B. Perkadox^{®} BC 40), Benzoylperoxid, 2,2'-Bis(tert. butylperoxy)diisopropylbenzol (z.B. Vulcup^{®}40 AE), 2,3,5-Trimethyl-2,5-di(benzoylperoxy)hexan und (2,5-Bis(tert.-butylperoxy)2,5-dimethylhexan, 3,3,5,7,7-Pentamethyl-1,2,4-trioxepan (z.B. Trigonox^{®} 311).

Eine wichtige Eigenschaft radikalischer Vernetzungsinitiatoren, besonders vernetzender Peroxide ist die Bildung freier Radikale, die allgemein durch die Halbwertszeit [t 1/2] beschrieben wird. Die Halbwertszeit ist die Zeit bei der noch 50% der ursprünglichen Konzentration eines radikalischen Vernetzungsinitiators bei einer bestimmten Temperatur vorhanden sind.

Die Halbwertszeiten werden über die Vulkanisationskurven bestimmt. Mit steigender Temperatur verkürzt sich die Halbwertszeit. Bevorzugt werden solche Peroxide eingesetzt, die oberhalb der Schmelz- bzw. Erweichungstemperatur der Komponente A eine ausreichend lange Halbswertszeit haben, um noch homogen in die Polymerschmelze eingemischt werden zu können. Bevorzugt werden solche Peroxide eingesetzt, deren Halbwertszeit unter der Verweilzeit im entsprechenden Mischaggregat liegen, damit die gebildeten Radikale vollständig für die Vernetzung verbraucht werden können.

Aufgrund der hohen Schmelz- bzw. Erweichungstemperatur des erfindungsgemäß als Komponente A eingesetzten Polyamids erfolgt die Vernetzung der Elastomerphase zur Herstellung der aus den erfindungsgemäßen Zusammensetzungen erhältlichen thermoplastischen Elastomere in einer entsprechend heißen Schmelze. Dies erfordert - in einer bevorzugten Ausführungsform - den Einsatz von radikalischen Vernetzungsinitiatoren, bevorzugt Peroxiden, mit ausreichend langen Halbswertszeit. Radikalische Vernetzungsinitiatoren, bevorzugt Peroxide, mit kurzen Halbwertszeiten bei geringen Temperaturen zerfallen bereits bei erstem Kontakt mit der Polymerschmelze und werden nicht homogen eingemischt und vernetzen die Elastomerphase nicht ausreichend oder inhomogen. Besonders bevorzugt werden daher erfindungsgemäß radikalische Vernetzungsinitiatoren, bevorzugt Peroxide, eingesetzt, die ausreichend lange Halbswertzeiten bei ≥ 175°C, besonders bevorzugt ≥ 180°C, ganz besonders bevorzugt ≥ 185°C, insbesondere ganz besonders bevorzugt ≥ 190°C und weiter ganz besonders bevorzugt ≥ 200°C aufweisen. Besonders bevorzugt wird in den erfindungsgemäßen vernetzbaren Zusammensetzungen 3,3,5,7,7-Pentamethyl-1,2,4-trioxepan das z. B. unter dem Handelsnamen Trigonox® 311 kommerziell erhältlich ist, eingesetzt.

### Komponente E (Covernetzer)

In den erfindungsgemäßen vernetzbaren Zusammensetzungen wird der Covernetzer in einer Menge von 0 bis 10 Gew.-Teilen pro 100 Gew.-Teile des α-Olefin-Vinylacetat-Copolymers (phr), bevorzugt 1 bis 6 phr, eingesetzt.

Es wurde überraschenderweise gefunden, dass die elastischen Eigenschaften, insbesondere der Druckverformungsrest, von thermoplastischen Elastomeren, die aus den erfindungsgemäßen vernetzbaren Zusammensetzungen hergestellt werden, durch die Zugabe eines Covernetzers in den vernetzbaren Zusammensetzungen verbessert werden können, ohne Beeinträchtigung der vorstehend erwähnten elastischen Eigenschaften und der Temperatur- und Medienbeständigkeiten. Insbesondere der Druckverformungsrest kann durch die Zugabe eines Covernetzers in den erfindungsgemäßen vernetzbaren Zusammensetzungen in dem technisch relevanten Bereich wesentlich verbessert werden. Dem Stand der Technik ist kein Hinweis zu entnehmen, dass durch den Einsatz eines Covernetzers in vernetzbaren Zusammensetzungen gemäß der vorliegenden Erfindung eine Verbesserung der elastischen Eigenschaften, insbesondere des Druckverformungsrestes, erzielt werden kann. Des Weiteren ist es möglich, durch Zugabe eines Covernetzers, die Vernetzermenge gegenüber der üblicherweise eingesetzten Vernetzermenge zu verringern, ohne das Eigenschaftsprofil der erhaltenen Produkte zu beeinträchtigen.

Geeignete Covernetzer sind zum Beispiel ausgewählt aus der Gruppe bestehend aus Triallylisocyanurat (TAIC), zum Beispiel kommerziell erhältlich unter DIAK7 von DuPont, N,N'-m-Phenylendimaleimid, z. B. kommerziell erhältlich unter HVA-2^{®} (DuPont Dow), Triallylcyanurat (TAC), flüssiges Polybutadien, z. B, erhältlich unter Ricon^{®} D153 von Ricon Resins, Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat. Bevorzugt eingesetzte Covernetzer sind ausgewählt aus der Gruppe bestehend aus Triallylisocyanurat (TAIC), N,N'-m-Phenylendimaleimid, Triallylcyanurat (TAC) und flüssigem Polybutadien. Besonders bevorzugt wird Triallylisocyanurat (TAIC) als Covernetzer eingesetzt.

Es ist möglich, in den erfindungsgemäßen vernetzbaren Zusammensetzungen einen Covernetzer oder zwei oder mehr Covernetzer gemeinsam einzusetzen.

### Komponente F (Verträglichkeitsvermittler)

Neben den vorstehend genannten Komponenten A bis E, wovon einige optional sind, können die erfindungsgemäßen vernetzbaren Zusammensetzungen zusätzlich mindestens einen Verträglichkeitsvermittler als Komponente F enthalten. Der Verträglichkeitsvermittler verbessert im Allgemeinen die Anbindung des α-Olefin-Vinylacetat-Copolymeren (Komponente B) an das Polyamid (Komponente A). Geeignete Verträglichkeitsvermittler sind dem Fachmann grundsätzlich bekannt. Beispielsweise sind funktionalisierte Polyolefine bzw. Polyolefin-Copolymere als Verträglichkeitsvermittler geeignet. Geeignete funktionelle Gruppen der funktionalisierten Polyolefine oder Polyolefin-Copolymere sind Carboxylgruppen, Carbonylgruppen, Halogenatome, Aminogruppen, Hydroxygruppen oder Oxazolingruppen. Bevorzugt sind die Polyolefine bzw. Polyolefin-Copolymere mit Carboxylgruppen funktionalisiert. Herstellungsverfahren für geeignete mit Carboxylgruppen funktionalisierte Polyolefine sind zum Beispiel in DE 41 23 963 und der darin genannten Literatur offenbart.

Bevorzugt ist der Verträglichkeitsvermittler in den Zusammensetzungen gemäß der vorliegenden Erfindung ein Copolymer auf Basis eines α-Olefin-Vinylacetat-Copolymeren als Polymerrückrad, das mit Carboxylgruppen, Carbonylgruppen, Halogenatomen, Aminogruppen, Hydroxygruppen oder Oxazolingruppen, bevorzugt mit Carboxylgruppen, funktionalisiert ist. Besonders bevorzugt wird ein Verträglichkeitsvermittler in den erfindungsgemäßen Zusammensetzungen eingesetzt, der mittels Pfropfung von α,β-ethylenisch ungesättigten Mono- und/oder Dicarbonsäuren oder deren Derivaten auf ein α-Olefin-Vinylacetat-Copolymerrückrad erhalten wird. Geeignete Verfahren zur Herstellung des besonders bevorzugten Verträglichkeitsvermittlers sind dem Fachmann bekannt und zum Beispiel in EP 1 801 162 A1 genannt. Die erfindungsgemäßen Zusammensetzungen weisen insbesondere dann ein besonders gutes Ölquellungsverhalten auf, wenn α-Olefin-Vinylacetat-Copolymere, insbesondere Ethylen-Vinylacetat-Copolymere, besonders bevorzugt EVM, mit hohen Vinylacetat-Gehalten von im Allgemeinen ≥ 60 Gew.-% gepfropft werden.

Der vorstehend erwähnte Verträglichkeitsvermittler wird in den erfindungsgemäßen vernetzbaren Zusammensetzungen, wenn er überhaupt vorliegt, in einer Menge von 0 bis 50 Gew.-%, bezogen auf die Gesamtmenge der Komponenten A, B und C, bevorzugt 3 bis 40 Gew.-%, besonders bevorzugt 5 bis 30 Gew.-% eingesetzt.

### Herstellung der erfindungsgemäßen vernetzbaren Zusammensetzungen und Vernetzung zu thermoplastischen Elastomeren (TPE-V)

Die erfindungsgemäßen vernetzbaren Zusammensetzungen können durch Mischen der Komponenten A, B, C, D, E und F - soweit sie in den Zusammensetzungen vorliegen - hergestellt werden. Die Mischung kann dabei unter Verwendung von in der Kautschuktechnologie bekannten Mischsystemen wie Innenmischern, z. B. Innenmischern mit ineinander greifender oder tangierender Rotorgeometrie, sowie auch in kontinuierlich mischenden Anlagen wie . Mischextrudern, z. B. Mischextrudern mit 2 bis 4 Wellenschnecken, erfolgen.

Bei der Durchführung des erfindungsgemäßen Verfahrens ist es wichtig, darauf zu achten, dass die Mischungstemperatur so hoch ist, dass die Komponente A unbeschadet in den plastischen Zustand überführt wird. Dies wird gewährleistet, wenn eine Temperatur oberhalb der höchsten Schmelz- oder Erweichungstemperatur der Komponente A gewählt wird. Besonders bevorzugt wird die Mischung der Komponenten A, B, C, D, E und F - soweit sie in den Zusammensetzungen vorliegen - bei einer Temperatur im Bereich von im Allgemeinen 150 bis 350 °C, bevorzugt 150 bis 280 °C vorgenommen.

Grundsätzlich sind verschiedene Varianten zur Mischung der einzelnen Komponenten möglich.

In einer ersten Variante werden die Komponenten A und B sowie gegebenenfalls die Komponenten C und F, soweit sie in den erfindungsgemäßen Zusammensetzungen vorliegen, vorgelegt und bei Temperaturen oberhalb der höchsten Schmelz- oder Erweichungstemperatur der Komponente A innig vermischt. Anschließend werden die Komponenten D und E (soweit die Komponente E in den erfindungsgemäßen Zusammensetzungen vorliegt) unter Fortsetzung des Mischens und unter Beibehalt der vorgenannten Mischungstemperatur hinzugefügt.

In einer zweiten Ausführungsform des erfindungsgemäßen Verfahrens wird die Komponente B vorgelegt und auf eine Temperatur bis knapp unterhalb der Schmelz- oder Erweichungstemperatur der Komponente A erhitzt. Anschließend wird die Komponente A zugegeben, die Temperatur auf eine Temperatur oberhalb der höchsten Schmelz- oder Erweichungstemperatur der Komponente A erhöht, und erst nachdem die Komponenten B und A, gegebenenfalls gemeinsam mit den Komponenten C und F, falls diese Komponenten vorliegen, innig vermischt sind, die Komponenten D und gegebenenfalls E (falls Komponente E vorliegt) unter Fortsetzung des Mischens und unter Beibehalt der Mischungstemperatur oberhalb der höchsten Schmelz- oder Erweichungstemperatur der Komponente A hinzugefügt.

In einer dritten Variante wird die Komponente A vorgelegt und auf eine Temperatur oberhalb der höchsten Schmelz- oder Erweichungstemperatur von Komponente A erhitzt, dann wird Komponente B hinzugefügt und die Komponenten A und B werden innig, gegebenenfalls gemeinsam mit den Komponenten C und F, falls diese vorliegen, innig vermischt. Im Anschluss werden die Komponenten D und gegebenenfalls E (falls Komponente E vorliegt) unter Fortsetzung des Mischens und unter Beibehalt der Mischungstemperatur oberhalb der höchsten Schmelz- oder Erweichungstemperatur der Komponente A hinzugefügt.

In einer vierten Variante können alle Komponenten A, B, C, D, E und gegebenenfalls F - soweit die Komponenten in den Zusammensetzungen vorliegen - gleichzeitig bei einer Temperatur oberhalb der höchsten Schmelz- oder Erweichungstemperatur des oder der thermoplastischen Polymere vorgelegt und anschließend innig gemischt werden.

Eine besonders gute Verteilung der Elastomer-Komponente B in der thermoplastischen Komponente A wird dann erreicht, wenn das Verfahren gemäß einer fünften, besonders bevorzugten Variante durchgeführt wird. Darin wird zunächst die Komponente B mit den Komponenten D und gegebenenfalls E (soweit Komponente E vorliegt) bei einer Temperatur unterhalb der höchsten Schmelz- oder Erweichungstemperatur der Komponente A gemischt. Die Temperatur unterhalb der höchsten Schmelz- oder Erweichungstemperatur der Komponente A ist abhängig von der eingesetzten Komponente A. Bevorzugt beträgt die Temperatur unterhalb der höchsten Schmelz- oder Erweichungstemperatur der Komponente A 30 bis 180 °C, besonders bevorzugt 50 bis 150 °C. Die erhaltene Mischung wird anschließend zu einer Mischung der Komponente A mit den Komponenten C und F - soweit die Komponenten C und F in den erfindungsgemäßen Zusammensetzungen vorliegen - die auf eine Temperatur oberhalb der höchsten Schmelz- oder Erweichungstemperatur der Komponente A erhitzt wurden, zugemischt. Anschließend werden alle Komponenten bei einer Temperatur oberhalb der höchsten Schmelz- oder Erweichungstemperatur der Komponente A innig vermischt.

Durch die vorstehend genannten Verfahrensvarianten, insbesondere durch die Verfahrensvariante 5, wird erreicht, dass die Komponente A und die Komponente B vor einer Vernetzung der Elastomerphase eine möglichst feine und gleichmäßige Verteilung erfahren. Typisch ist eine Teilchengröße der Elastomerteilchen vor der Vernetzung von < 5 µm.

Die vorstehend und nachstehend erwähnte Temperatur oberhalb der höchsten Schmelz- oder Erweichungstemperatur der Komponente A ist abhängig von der eingesetzten Komponente A. Bevorzugt ist die Temperatur oberhalb der höchsten Schmelz- oder Erweichungstemperatur der Komponente A 150 °C bis 350 °C, besonders bevorzugt 200 °C bis 300 °C.

Die Zugabezeit, Temperatur, Form und Menge der Komponenten D und E sollte darüber hinaus so gewählt sein, dass eine gute Verteilung der Komponenten D und gegebenenfalls E in der Elastomerphase gewährleistet ist, die Elastomer- und Thermoplastphase in dem oben beschriebenen Zustand vorliegen und erst dann die Vernetzung der Elastomerphase erfolgt, so dass eine Phasenumkehr erfolgt oder eine co-kontinuierliche Phasenstruktur der Elastomeren und der Thermoplastphase erfolgt, bzw. das Elastomer in der Thermoplastphase mit Teilchen < 5 µm dispergiert vorliegt.

Die erfindungsgemäßen vernetzbaren Zusammensetzungen eignen sich hervorragend zur Bereitstellung thermoplastischer Elastomere mit ausgewogenen Eigenschaften, insbesondere mit sehr guten Temperatur- und Medienbeständigkeiten bei gleichzeitig sehr guten elastischen Eigenschaften in einem weiten Härtebereich.

Ein weiterer Gegenstand der vorliegenden Erfindung ist daher ein Verfahren zur Herstellung von thermoplastischen Elastomeren umfassend die Vernetzung der erfindungsgemäßen Zusammensetzungen oder von Zusammensetzungen hergestellt gemäß dem erfindungsgemäßen Verfahren. Dazu unterwirft man die erfindungsgemäßen vernetzbaren Zusammensetzungen einem fortgesetzten Mischungsvorgang bei einer Temperatur, welche oberhalb der höchsten Schmelz- oder Erweichungstemperatur der eingesetzten Komponente A liegt. Bevorzugte Temperaturen oberhalb der Schmelz- oder Erweichungstemperatur der Komponente A sind vorstehend genannt.

Gemäß der vorliegenden Erfindung erfolgt eine dynamische Vernetzung. Die Vernetzung der dispersen Elastomerphase erfolgt somit während der Mischung der Komponenten A bis F (soweit diese in der Mischung vorliegen). Diese setzt ein, wenn das erfindungsgemäße Verfahren zur Herstellung der erfindungsgemäßen vernetzbaren Zusammensetzungen, insbesondere ein Verfahren gemäß den Verfahrensvarianten 1 bis 5, besonders bevorzugt während der Verfahrensvariante 5, bei einer Temperatur oberhalb der Schmelz- oder Erweichungstemperatur der Komponente A in Anwesenheit der Komponenten D und gegebenenfalls E fortgeführt wird.

Bei dem Mischvorgang der Komponenten A, B, C, D, E und F - soweit diese Komponenten vorliegen - zur Herstellung der erfindungsgemäßen vernetzbaren Zusammensetzung wird ein Verfahrenspunkt erreicht, in dem die Leistungsaufnahme im Mischaggregat einen konstanten Wert annimmt. Der Mischvorgang zur Herstellung der vernetzbaren Zusammensetzung ist zu diesem Zeitpunkt abgeschlossen, und die vernetzbare Zusammensetzung liegt vor. Bei Bedarf kann der Mischvorgang an dieser Stelle beendet werden und die vernetzbaren Zusammensetzungen können durch Abschrecken, d. h. durch Absenken der Temperatur, erhalten werden, und - falls erwünscht - isoliert werden. Bei einer Fortsetzung des Mischungsvorgangs, ob unmittelbar oder nach Unterbrechung wie beschrieben, findet die Vernetzung durch die Komponenten D und gegebenenfalls E statt, die dadurch zu erkennen ist, dass eine Steigerung der Leistungsaufnahme des Mischaggregats erfolgt. Es handelt sich hierbei um eine dynamische Vernetzung der elastomeren Komponente B.

Nach erfolgter Phasenumkehr bzw. Ausbildung einer co-kontinuierlichen Phase wird das erhaltene vernetzte Produkt, d. h. das thermoplastische Elastomer, im Allgemeinen auf eine Temperatur unterhalb der Schmelz- oder Erweichungstemperatur des oder der thermoplastischen Polymere abgekühlt.

Ein weiterer Gegenstand der vorliegenden Erfindung sind thermoplastische Elastomere, die durch Vernetzung der erfindungsgemäßen vernetzbaren Zusammensetzungen erhältlich sind. Geeignete Vernetzungsverfahren zur Herstellung der erfindungsgemäßen Elastomere sowie geeignete vernetzbare Zusammensetzungen sind vorstehend genannt.

Ein weiterer Gegenstand der vorliegenden Erfindung betrifft thermoplastische Elastomere enthaltend
a) 10 bis < 30 Gew.-%, bevorzugt 10 bis 25 Gew.-% mindestens eines Polyamids als Komponente A;
b) > 50 bis 90 Gew.-%, bevorzugt 60 bis 89,5 Gew.-% mindestens eines α-Olefin-Vinylacetat-Copolymers, das durch mindestens einen radikalischen Vernetzungsinitiator gegebenenfalls in Kombination mit mindestens einem Covernetzer vernetzt ist, als Komponente B";
c) 0 bis 20 Gew.-%, bevorzugt 0,5 bis 15 Gew.-% Füllmaterialien, Weichmacher, Additive und/oder Zusatzstoffe als Komponente C;
wobei die Summe der Komponenten A, B und C 100 Gew.-% ergibt.

Die thermoplastischen Elastomere gemäß der vorliegenden Erfindung zeichnen sich dadurch aus, dass die Elastomerkomponente B in fein verteilter Form in der thermoplastischen Komponente A vorliegt. Die thermoplastischen Elastomere gemäß der vorliegenden Erfindung zeichnen sich durch eine sehr gute Temperatur- und Medienbeständigkeit bei gleichzeitig sehr guten elastischen Eigenschaften in einem niedrigen Härtebereich (Shore Härte A) aus. Sie verfügen auch bei hohen Temperaturen von deutlich mehr als 150 °C, die vor allem im Automobilbau gefordert werden, über exzellente physikalische und dynamische Eigenschaften, beispielsweise eine hervorragende Druckverformungsrest. Erst nach Aufschmelzen der Thermoplastphase wird das gesamte System thermoplastisch verarbeitbar und erfüllt damit die notwendigen Voraussetzungen für ein thermoplastisches Elastomer.

Ein weiterer Gegenstand der vorliegenden Erfindung ist somit die Verwendung der erfindungsgemäßen Zusammensetzungen zur Herstellung von thermoplastischen Elastomeren sowie die Verwendung der erfindungsgemäßen thermoplastischen Elastomere zur Herstellung von Formteilen, bevorzugt Riemen, Dichtungen, Manschetten, Schläuchen, Membran, Dämpfern, Profilen, oder Kabelummantelungen, Schmelzklebstoffen, Folien oder zur Kunststoff-Kautschuk-Coextrusion, oder zum Co-Formteil-Spritzen.

Des Weiteren betrifft die vorliegende Erfindung Formteile, Kabelummantelungen, Schmelzklebstoffe oder Folien enthaltend die erfindungsgemäßen thermoplastischen Elastomere.

Geeignete Komponenten der erfindungsgemäßen vernetzbaren Zusammensetzungen und der erfindungsgemäßen thermoplastischen Elastomere sowie geeignete Herstellungsverfahren zur Herstellung der erfindungsgemäßen vernetzbaren Zusammensetzungen sowie zur Herstellung der erfindungsgemäßen thermoplastischen Elastomere sind vorstehend genannt.

Die erhaltenen Formteile zeichnen sich durch hervorragende physikalische Eigenschaften, insbesondere hervorragende Elastizitäten in einem weiten, insbesondere in einem niedrigen, Härtebereich, sowie Hochtemperaturbeständigkeit und Medienbeständigkeit, insbesondere Ölbeständigkeit, aus. Diese Eigenschaften sind insbesondere für Schläuche, Riemen, Membranen, Dichtungen, Bälge, Kabelummantelung, Schmelzklebstoffe, Folien sowie Manschetten beispielsweise für die Automobil- und andere Industrieanwendungen von großer Bedeutung. Die Formteile können z.B. auf einfache Weise in einem Einstufenprozess hergestellt werden.

Die nachfolgenden Beispiele erläutern die Erfindung zusätzlich.

### Beispiele

### Allgemeine Verfahrensvorschrift zur Herstellung der thermoplastischen Elastomere

Ein Innenmischer mit 1,5 1 Mischvolumen der Firma Werner und Pfleiderer wird auf eine Kammertemperatur von 180°C vorgeheizt. Der Kautschuk (Ethylen-Vinylacetat-Copolymer) und alle Additive inklusive Covernetzer - soweit ein Covernetzer eingesetzt wird - jedoch außer des Vernetzungssystems, Peroxid, wird vorgelegt und für 1 min im Innenmischer bei einer Drehzahl von 100 upm gemischt. Der gemäß den folgenden Beispielen eingesetzte Thermoplast mit einem Schmelzpunkt von 210°C - 220°C wird jetzt in den Innenmischer gegeben. Bei einer Drehzahl von 130-150 upm steigt die Temperatur im Innenmischen innerhalb von 2 min auf eine Temperatur von 230°C bis 250°C an. Diese Temperatur liegt über der Temperatur des Schmelzpunkts des Thermoplasten. Der Thermoplast wird vollständig aufgeschmolzen. Durch weiteres Mischen vom 3 min bei dieser Temperatur werden die Komponenten Kautschuk und Thermoplast in der Schmelze innig vermischt. In diesem Mischabschnitt wird die gewünschte Teilchengröße von < 5 µm, eine homogene Verteilung der beiden Komponenten und eine co-continuierliche Phasenmorphologie erreicht. Nach Abschluss der 3 min erfolgt die Zugabe des Vernetzungssystems. Bei geeigneten Peroxiden mit hoher Vernetzungstemperatur entweder direkt oder alternativ in einem Vorcompound, indem das Peroxid in einer kleinen Menge des Kautschuks vor Zugabe in den Innenmischer auf einer Walze vorgemischt wird. Während der Mischzeit von 3 min bei einer Temperatur von 230°C bis 250°C und einer Drehzahl von 150 upm findet die dynamische Vernetzung der Kautschukphase im Innenmischer statt. Der Inhalt des Innenmischers wird ausgeworfen und noch heiß möglichst schnell auf einer Walze zu einem Fell ausgewalzt. Anschließend werden hieraus Prüfplatten ausgeschnitten, die bei Temperaturen von 250°C oberhalb des Schmelzpunkts des TPEs von 220°C für 10 min gepresst werden. Die Prüfplatten haben eine Stärke von 2 mm oder 6 mm abhängig von den nachfolgenden Prüfungen. Alle nachfolgenden Prüfungen werden an diesen Platten durchgeführt. Dehnung und Spannung werden an 2 mm Platten und der Compression Set an 6 mm Platten geprüft.

Die in den Beispielen eingesetzten Komponenten Thermoplast, Kautschuk, Additive und Covernetzer sind in den nachstehenden Tabellen genannt. Die eingesetzten Mengen sind in den nachstehenden Tabellen in Gew.-Teilen angegeben, soweit nichts anderes erwähnt ist.

In Tabelle 1 sind die physikalischen Eigenschaften von drei erfindungsgemäßen thermoplastischen Elastomeren (Bsp. 1, Bsp. 3 und Bsp. 4) und einem nicht erfindungsgemäßen thermoplastischen Elastomer als Vergleichsbeispiel (Bsp. 2(V)) zusammengefasst:

**Tabelle 1**

| | | **Bsp. 1** | **Bsp. 2(V)** | **Bsp. 3** | **Bsp. 4** |
|---|---|---|---|---|---|
| **Rezeptur (Gew.-Teile)** | | | | | |
| EVM Kautschuk | Levapren 600 ¹⁾ | | | 100 | 100 |
| | Levapren 700 ²⁾ | 100 | 100 | | |
| | Durethan B 31 SK ³⁾ | 40 (27 Gew.-%) | 50 (32 Gew.-%) | 40 | 40 |
| Füllstoff | Aerosil R 972 ⁴⁾ | | | 20 | 20 |
| Peroxid | Trigonox 311 ⁵⁾ | 1 | 1 | 1 | 1 |
| Co-Agens | TAIC ⁶⁾ | | | 1,5 | |
| Additive | Maglite DE ⁷⁾ | 2 | 2 | 2 | 2 |
| | Rhenogran PCD 50 ⁸⁾ | 3 | 3 | 3 | 3 |
| Eigenschaften | | | | | |
| | Spannung (MPa) (ISO 37) | 6,3 | 6,2 | 9,4 | 6,5 |
| | Härte Shore A (DIN 53505, ISO 868) | 78,2 | 88,6 | 91,8 | 79 |
| | Compression set (125 °C, 24 h, 25 %) (ISO 815) | 77 | 87,6 | 71,8 | 81 |
| | Compression set (150 °C, 24 h, 25 %) (ISO 815) | 72 | 88,2 | 69,4 | 85 |

| | | | | | |
|---|---|---|---|---|---|
| ¹⁾ Levapren^{®} 600: Ethylen-Vinylacetat-Copolymer mit 60 ± 1,5 Gew.-% Vinylacetat der Lanxess Deutschland GmbH ²⁾ Levapren^{®} 700: Ethylen-Vinylacetat-Copolymer mit 70 ± 1,5 Gew.-% Vinylacetat der Lanxess Deutschland GmbH ³⁾ Durethan B 31 SK: Polyamid 6 der Lanxess Deutschland GmbH ⁴⁾ Aerosil R972: hydrophobierte pyrogene Kieselsäure der Evonik Degussa ⁵⁾ Trigonox^{®} 311: 3,3,5,7,7-Pentamethyl-1,2,4-trioxepan der Akzo Nobel Chemicals ⁶⁾ TAIC: Triallylisocyanurat-DIAK 7 von DuPont ⁷⁾ Maglite^{®} DE: Magnesiumoxid von CP Hall Co ⁸⁾ Rhenogran PCD 50: Polycarbodiimid der Rhein Chemie Rheinau GmbH | | | | | |

Bei einem Vergleich von Bsp. 1 und Vergleichsbeispiel Bsp. 2(V) zeigt sich, dass der Druckverformungsrest (Compression Set) in den erfindungsgemäßen thermoplastischen Elastomeren wesentlich geringer ist als in den thermoplastischen Elastomeren gemäß dem Vergleichsbeispiel, wobei die weiteren physikalischen Eigenschaften Spannung und Härte nicht (wesentlich) verschlechtert sind.

Bei einem Vergleich der erfindungsgemäßen Beispiele 3 und 4 zeigt sich, dass der Druckverformungsrest (Compression Set) durch Zugabe eines Covernetzers (TAIC) wesentlich vermindert werden kann, wobei die weiteren physikalischen Eigenschaften Spannung und Härte nicht (wesentlich) verschlechtert sind.

Die in den vorstehend genannten Beispielen erwähnten Additive sind in den thermoplastischen Elastomeren nicht zwingend erforderlich und dienen der besseren Verarbeitbarkeit der thermoplastischen Elastomere. Sie haben keinen wesentlichen Einfluss auf die in der vorstehenden Tabelle 1 genannten physikalischen Eigenschaften.

In Tabelle 2 sind die physikalischen Eigenschaften von zwei erfindungsgemäßen thermoplastischen Elastomeren mit verschiedenen Kompatibilisatoren zusammengefasst (Bsp. 5 und Bsp. 6):

**Tabelle 2**

| | | Bsp. 5 | Bsp. 6 |
|---|---|---|---|
| Rezeptur (Gew.-Teile) | | | |
| EVM Kautschuk | Levapren 600 ¹⁾ | 95 | 95 |
| MAH_g_EVM | MAH_g_Lev 600 ²⁾ | 5 | |
| MAH_g_EVA | Fusabond MC250D³⁾ | | 5 |
| Polyamid 6 | Durethan B 31 SK⁴⁾ | 40 (27 Gew.-%) | 40 (27 Gew.-%) |
| Peroxid | Trigononx 311 ⁵⁾ | 1 | 1 |
| Additive | Maglite DE ⁶⁾ | 2 | 2 |
| | Rhenogran PCD 50 ⁷⁾ | 3 | 3 |
| Eigenschaften | Zugdehnung und Härte | | |
| | Dehnung (%) (ISO 37) | 221 | 233 |
| | Spannung (MPa) (ISO 37) | 5,1 | 5,2 |
| | Härte Shore A (DIN 53505, ISO 868) | 81 | 73 |
| | Compression set (125 °C, 24 h, 25 %) (ISO 815) | 81,5 | 86,1 |
| | Compression set (150 °C, 24 h, 25 %) (ISO 815) | 84,7 | 86,8 |
| | Quellung (%) Volumen, Motoröl für 24 h bei 125°C (ISO 1817) | 21,95 | 29,68 |

| | | | |
|---|---|---|---|
| ¹⁾ Levapren^{®} 600: Ethylen-Vinylacetat-Copolymer mit 60 ± 1,5 Gew.-% Vinylacetat der Lanxess Deutschland GmbH ²⁾ MAH_g_Lev 600: Levapren^{®} 600, gepfropft mit Maleinsäureanhydrid; die Herstellung erfolgt in Analogie zu Beispiel 1 (Verfahrensschritt 1 in EP 1 801 162 A1) ³⁾ Fusabond MC250D: Ethylen-Vinylacetat-Copolymer mit 28 Gew.-% Vinylacetat von DuPont ⁴⁾ Durethan B 31 SK: Polyamid 6 der Lanxess Deutschland GmbH ⁵⁾ Trigonox^{®} 311: 3,3,5,7,7-Pentamethyl-1,2,4-trioxepan der Akzo Nobel Chemicals ⁶⁾ Maglite^{®} DE: Magnesiumoxid von CP Hall Co ⁷⁾ Rhenogran PCD 50: Polycarbodiimid der Rhein Chemie Rheinau GmbH | | | |

Bei einem Vergleich von Bsp. 5 und Bsp. 6 zeigt sich, dass die Quellung der erfindungsgemäßen thermoplastischen Elastomeren in Motoröl wesentlich geringer ist, wenn ein Verträglichkeitsvermittler auf Basis von EVM (Ethylen-Vinylacetat-Copolymer) mit einem hohen Vinylacetatgehalt, in Beispiel 5 von 60 Gew.-%, eingesetzt wird. Die thermoplastischen Elastomere gemäß Beispiel 6, worin ein Verträglichkeitsvermittler auf Basis von EVA mit einem Vinylacetatgehalt von 28 Gew.- % Vinylacetat eingesetzt wird, zeigen ebenfalls ein gutes Eigenschaftsprofil, die Quellung in Motoröl ist jedoch moderat und höher als in Beispiel 5.

## Patentansprüche

1. Vernetzbare Zusammensetzungen enthaltend
a) 10 bis < 30 Gew.-% mindestens eines Polyamids als Komponente A;
b) >50 bis 90 Gew.-% mindestens eines α-Olefin-Vinylacetat-Copolymers, wobei das α-Olefin-Vinylacetat-Copolymer ein α-Olefin-Vinylacetat-Copolymer mit einem Vinylacetatgehalt von ≥ 40 Gew.-%, bevorzugt ≥ 50 Gew.-% ist, als Komponente B;
c) 0 bis 20 Gew.-% Füllmaterialien, Weichmacher, Additive und/oder Zusatzstoffe als Komponente C;
wobei die Summe der Komponenten A, B und C 100 Gew.-% ergibt,
und
d) 0,2 bis 10 Gewichtsteile pro 100 Gewichtsteile des α-Olefin-Vinylacetat-Copolymers (phr) mindestens eines radikalischen Vemetzungsinitiators als Komponente D; und
e) 0 bis 10 Gewichtsteile pro 100 Gewichtsteile des α-Olefin-Vinylacetat-Copolymeren (phr) mindestens eines Covernetzers als Komponente E.

2. Zusammensetzungen nach Anspruch 1, **dadurch gekennzeichnet, dass** als Polyamid ein Polyamid basierend auf C₆-C₁₂-Lactamen oder ω-Aminocarbonsäuren mit 4 bis 18 Kohlenstoffatomen, bevorzugt 6 bis 12 Kohlenstoffatomen, oder ein Polykondensat eingesetzt wird, erhältlich aus der Polykondensation mindestens eines Diamins aus der Gruppe bestehend aus aliphatischen Diaminen mit 4 bis 18 Kohlenstoffatomen und cycloaliphatischen Diaminen mit 7 bis 22 Kohlenstoffatomen, mit mindestens einer Dicarbonsäure ausgewählt aus der Gruppe bestehend aus aliphatischen Dicarbonsäuren mit 4 bis 44 Kohlenstoffatomen, cycloaliphatischen Dicarbonsäuren mit 8 bis 24 Kohlenstoffatomen und aromatischen Dicarbonsäuren mit 8 bis 20 Kohlenstoffatomen.

3. Zusammensetzungen nach Anspruch 2, **dadurch gekennzeichnet, dass** das Polyamid ausgewählt ist aus der Gruppe bestehend aus Polycaprolactam, Polylaurolactam, Polyhexamethylenadipamid, Polyhexamethylenazelamid, Polyhexamethylensebacamid, Polyhexamethylenisophthalamid, Polyaminoundecansäure, Polytetramethylenadipamid, Copolymeren von Caprolactam, Hexamethylendiamin und Adipinsäure, und Aramiden wie Polyparaphenylenterephthalamid.

4. Zusammensetzungen nach einem der Ansprüche 1 bis 3, **dadurch gekennzeichnet, dass** das α-Olefin-Vinylacetat-Copolymer ein Ethylen-Vinylacetat-Copolymer ist.

5. Zusammensetzungen nach einem der Ansprüche 1 bis 4, **dadurch gekennzeichnet, dass** als radikalische Vernetzungsinitiatoren Peroxide eingesetzt werden, bevorzugt Peroxide, die Vernetzungstemperaturen von ≥ 175°C, besonders bevorzugt ≥ 180°C, ganz besonders bevorzugt ≥ 185°C, insbesondere ganz besonders bevorzugt ≥ 190°C und weiter ganz besonders bevorzugt ≥ 200°C aufweisen.

6. Zusammensetzungen nach einem der Ansprüche 1 bis 5, **dadurch gekennzeichnet, dass** der Covernetzer ausgewählt ist aus der Gruppe bestehend aus Triallylisocyanurat, N,N'-m-Phenylendimaleimid, Triallylcyanurat, flüssigem Polybutadien, Trimethylolpropan-N,N'-m-phenylenmaleimid, N-Methyl-N,N'-m-phenylendimaleimid, Divinylbenzol, polyfunktionellen Methacrylatmonomeren wie Ethylenglycoldimethacrylat, Diethylenglycoldimethacrylat, Polyethylenglycoldimethacrylat, Trimethylolpropantrimethacrylat und Allylmethacrylat, und polyfunktionellen Vinylmonomeren wie Vinylbutyrat und Vinylstearat, bevorzugt wird Triallylisocyanurat als Covernetzer eingesetzt.

7. Zusammensetzungen nach einem der Ansprüche 1 bis 6, **dadurch gekennzeichnet, dass** die Zusammensetzungen zusätzlich mindestens einen Verträglichkeitsvermittler als Komponente F enthalten, wobei der Verträglichkeitsvermittler bevorzugt ein Copolymer auf Basis eines α-Olefin-Vinylacetat-Copolymeren als Polymerrückgrat ist, das mit Carboxylgruppen, Carbonylgruppen, Halogenatomen, Aminogruppen, Hydroxygruppen oder Oxazolingruppen, bevorzugt Carboxylgruppen, funktionalisiert ist, wobei der Verträglichkeitsvermittler besonders bevorzugt mittels Pfropfung von α,β-ethylenisch ungesättigten Mono- und/oder Dicarbonsäuren oder deren Derivaten auf ein α-Olefin-Vinylacetat-Copolymerrückgrat erhalten wird.

8. Zusammensetzungen nach Anspruch 7, **dadurch gekennzeichnet, dass** als Verträglichkeitsvermittler F mindestens ein Verträglichkeitsvermittler eingesetzt wird, der aus einer Kombination mindestens eines Phenolharzes mit mindestens einer Cl-haltigen Lewissäure, bevorzugt ZnCl₂, aufgebaut ist.

9. Verfahren zur Herstellung von Zusammensetzungen nach einem der Ansprüche 1 bis 8 durch Mischen der Komponenten A, B, C, D, E und F - soweit sie in den Zusammensetzungen vorliegen.

10. Verfahren nach Anspruch 9, **dadurch gekennzeichnet, dass** zunächst die Komponente B mit den Komponenten D und gegebenenfalls E bei Temperaturen unterhalb der höchsten Schmelz- oder Erweichungstemperatur der Komponente A gemischt werden und die erhaltene Mischung anschließend zu einer auf Temperaturen oberhalb der höchsten Schmelz- oder Erweichungstemperatur der Komponente A erhitzten Mischung der Komponente A, die gegebenenfalls die Komponente C sowie gegebenenfalls die Komponente F enthält, zugemischt wird.

11. Verfahren zur Herstellung von thermoplastischen Elastomeren umfassend die Vernetzung von Zusammensetzungen nach einem der Ansprüche 1 bis 8 oder hergestellt gemäß den Ansprüchen 9 oder 10 bei Temperaturen oberhalb der höchsten Schmelz- oder Erweichungstemperatur der Komponente A.

12. Thermoplastische Elastomere erhältlich durch Vernetzung von Zusammensetzungen gemäß einem der Ansprüche 1 bis 8.

13. Thermoplastische Elastomere enthaltend
a) 10 bis < 30 Gew.-% mindestens eines Polyamids als Komponente A;
b) >50 bis 90 Gew.-% mindestens eines α-Olefin-Vinylacetat-Copolymers, das durch mindestens einen radikalischen Vernetzungsinitiator gegebenenfalls in Kombination mit mindestens einem Covernetzer vernetzt ist, als Komponente B;
c) 0 bis 20 Gew.-% Füllmaterialien, Weichmacher, Additive und/oder Zusatzstoffe als Komponente C;
wobei die Summe der Komponenten A, B und C 100 Gew. -% ergibt.

14. Verwendung von Zusammensetzungen gemäß einem der Ansprüche 1 bis 8 zur Herstellung von thermoplastischen Elastomeren.

15. Verwendung von thermoplastischen Elastomeren gemäß Anspruch 12 oder 13 zur Herstellung von Formteilen, bevorzugt Riemen, Dichtungen, Manschetten, Schläuchen, Membranen, Dämpfern, Profilen, oder Kabelummantelungen, Schmelzklebstoffen, Folien oder zur Kunststoff-Kautschuk-Coextrusion oder zum Co-Formteil-Spritzen.

16. Formteile, Kabelummantelungen, Schmelzklebstoffe oder Folien enthaltend thermoplastische Elastomere gemäß einem der Ansprüche 12 bis 13.

## Claims

1. Crosslinkable compositions
a) from 10 to < 30% by weight of at least one polyamide as component A;
b) from > 50 to 90% by weight of at least one α-olefin-vinyl acetate copolymer, where the α-olefin-vinyl acetate copolymer is an α-olefin-vinyl acetate copolymer with vinyl acetate content of ≥ 40% by weight, preferably ≥ 50% by weight, as component B;
c) from 0 to 20% by weight of filler materials, plasticizers, additives and/or additions, as component C;
where the entirety of components A, B and C is 100% by weight,
and
d) from 0.2 to 10 parts by weight per 100 parts by weight of the α-olefin-vinyl acetate copolymer (phr) of at least one free-radical crosslinking initiator, as component D; and
e) from 0 to 10 parts by weight per 100 parts by weight of the α-olefin-vinyl acetate copolymer (phr) of at least one co-crosslinking agent, as component E.

2. Compositions according to Claim 1, **characterized in that** the polyamide used comprises a polyamide based on C₆-C₁₂ lactams or ω-aminocarboxylic acids having from 4 to 18 carbon atoms, preferably from 6 to 12 carbon atoms, or a polycondensate, obtainable from the polycondensation of at least one diamine, from the group consisting of aliphatic diamines having from 4 to 18 carbon atoms and of cycloaliphatic diamines having from 7 to 22 carbon atoms, with at least one dicarboxylic acid selected from the group consisting of aliphatic dicarboxylic acids having from 4 to 44 carbon atoms, of cycloaliphatic dicarboxylic acids having from 8 to 24 carbon atoms, and of aromatic dicarboxylic acids having from 8 to 20 carbon atoms.

3. Compositions according to Claim 2, **characterized in that** the polyamide has been selected from the group consisting of polycaprolactam, polylaurolactam, polyhexamethyleneadipamide, polyhexamethyleneazelamide, polyhexamethylenesebacamide, polyhexamethyleneisophthalamide, polyaminoundecanoic acid, polytetramethyleneadipamide, copolymers of caprolactam, hexamethylenediamine and adipic acid, and aramids such as polyparaphenyleneterephthalamide.

4. Compositions according to any of Claims 1 to 3, **characterized in that** the α-olefin-vinyl acetate copolymer is an ethylene-vinyl acetate copolymer.

5. Compositions according to any of Claims 1 to 4, **characterized in that** the free-radical crosslinking initiators used comprise peroxides, preferably peroxides which have crosslinking temperatures of ≥ 175°C, particularly preferably ≥ 180°C, very particularly preferably ≥ 185°C, with very particular preference ≥ 190°C and more particularly preferably ≥ 200°C.

6. Compositions according to any of Claims 1 to 5, **characterized in that** the co-crosslinking agent has been selected from the group consisting of triallyl isocyanurate, N,N'-m-phenylenedimaleimide, triallyl cyanurate, liquid polybutadiene, trimethylolpropane-N,N'-m-phenylenemaleimide, N-methyl-N,N'-m-phenylenedimaleimide, divinylbenzene, polyfunctional methacrylate monomers, such as ethylene glycol dimethacrylate, diethylene glycol dimethacrylate, polyethylene glycol dimethacrylate, trimethylolpropane trimethacrylate and allyl methacrylate, and polyfunctional vinyl monomers, such as vinyl butyrate and vinyl stearate, preference being given to use of triallyl isocyanurate as co-crosslinking agent.

7. Compositions according to any of Claims 1 to 6, **characterized in that** the compositions also comprise at least one compatibilizer, as component F, where the compatibilizer is preferably a copolymer based on an α-olefin-vinyl acetate copolymer as main polymer chain, functionalized with carboxy groups, carbonyl groups, halogen atoms, amino groups, hydroxy groups or oxazoline groups, preferably carboxy groups, where the compatibilizer is particularly preferably obtained by means of grafting of α,β-ethylenically unsaturated mono- and/or dicarboxylic acids or their derivatives onto a main chain provided by an α-olefin-vinyl acetate copolymer.

8. Compositions according to Claim 7, **characterized in that** the compatibilizer F used comprises at least one compatibilizer which is composed of a combination of at least one phenolic resin with at least one Cl-containing Lewis acid, preferably ZnCl₂.

9. Process for the preparation of compositions according to any of Claims 1 to 8 via mixing of components A, B, C, D, E and F - to the extent that they are present in the compositions.

10. Process according to Claim 9, **characterized in that** component B is first mixed with components D and, if appropriate, E at temperatures below the highest melting or softening point of component A, and the resultant mixture is then admixed with a mixture of component A which, if appropriate, comprises component C, and also, if appropriate, component F, and which has been heated to temperatures above the highest melting or softening point of component A.

11. Process for the preparation of thermoplastic elastomers encompassing the crosslinking of compositions according to any of Claims 1 to 8, or prepared according to Claim 9 or 10, at temperatures above the highest melting or softening point of component A.

12. Thermoplastic elastomers obtainable via crosslinking of compositions according to any of Claims 1 to 8.

13. Thermoplastic elastomers comprising
a) from 10 to < 30% by weight of at least one polyamide as component A;
b) as component B, from > 50 to 90% by weight of at least one α-olefin-vinyl acetate copolymer which has been crosslinked via at least one free-radical crosslinking initiator, if appropriate in combination with at least one co-crosslinking agent;
c) from 0 to 20% by weight of filler materials, plasticizers, additives and/or additions, as component C;
where the entirety of components A, B and C is 100% by weight.

14. Use of compositions according to any of Claims 1 to 8 for the production of thermoplastic elastomers.

15. Use of thermoplastic elastomers according to Claim 12 or 13 for the production of mouldings, preferably drive belts, gaskets, sleeves, hoses, membranes, dampers, profiles, or cable sheathing, hot-melting adhesives, or foils, or for plastics-rubber coextrusion, or for co-injection-moulding.

16. Mouldings, cable sheathing, hot-melting adhesives or foils comprising thermoplastic elastomers according to any of Claims 12 to 13.

## Revendications

1. Compositions réticulables, contenant
a) 10 à < 30% en poids d'au moins un polyamide comme composant A ;
b) > 50 à 90% en poids d'au moins un copolymère d'α-oléfine-acétate de vinyle, le copolymère d'α-oléfine-acétate de vinyle étant un copolymère d'α-oléfine-acétate de vinyle présentant une teneur en acétate de vinyle ≥ 40% en poids, de préférence ≥50 % en poids, comme composant B ;
c) 0 à 20% en poids de matières de charge, de plastifiants, d'additifs et/ou d'adjuvants comme composant C ;
la somme des composants A, B et C valant 100% en poids, et
d) 0,2 à 10 parties en poids par 100 parties en poids du copolymère d'α-oléfine-acétate de vinyle (phr) d'au moins un initiateur de réticulation par voie radicalaire comme composant D ; et
e) 0 à 10 parties en poids par 100 parties en poids du copolymère d'α-oléfine-acétate de vinyle (phr) d'au moins un coréticulant comme composant E.

2. Compositions selon la revendication 1, **caractérisées en ce qu'**on utilise, comme polyamide, un polyamide à base de C₆-C₁₂-lactames ou d'acides ω-aminocarboxyliques comprenant 4 à 18 atomes de carbone, de préférence 6 à 12 atomes de carbone, ou un produit de polycondensation, pouvant être obtenu à partir de la polycondensation d'au moins une diamine du groupe constitué par les diamines aliphatiques comprenant 4 à 18 atomes de carbone et les diamines cycloaliphatiques comprenant 7 à 22 atomes de carbone, avec au moins un acide dicarboxylique choisi dans le groupe constitué par les acides dicarboxyliques aliphatiques comprenant 4 à 44 atomes de carbone, les acides dicarboxyliques cycloaliphatiques comprenant 8 à 24 atomes de carbone et les acides dicarboxyliques aromatiques comprenant 8 à 20 atomes de carbone.

3. Compositions selon la revendication 2, **caractérisées en ce que** le polyamide est choisi dans le groupe constitué par le polycaprolactame, le polylaurolactame, le polyhexaméthylène-adipamide, le polyhexaméthylène-azélamide, le polyhexaméthylène-sébacamide, le polyhexaméthylène-isophtalamide, le poly(acide amino-undécanoïque), le polytétraméthylène-adipamide, les copolymères de caprolactame, d'hexaméthylènediamine et d'acide adipique et les aramides tels que le polyparaphénylène-téréphtalamide.

4. Compositions selon l'une quelconque des revendications 1 à 3, **caractérisées en ce que** le copolymère d'α-oléfine-acétate de vinyle est un copolymère d'éthylène-acétate de vinyle.

5. Compositions selon l'une quelconque des revendications 1 à 4, **caractérisées en ce qu'**on utilise, comme initiateurs de réticulation par voie radicalaire, des peroxydes, de préférence des peroxydes qui présentent des températures de réticulation ≥ 175°C, de manière particulièrement préférée ≥ 180°C, de manière tout particulièrement préférée ≥ 185°C, en particulier de manière tout particulièrement préférée ≥ 190°C et de manière tout particulièrement préférée encore ≥ 200°C.

6. Compositions selon l'une quelconque des revendications 1 à 5, **caractérisées en ce que** le coréticulant est choisi dans le groupe constitué par le triallylisocyanurate, le N,N'-m-phénylènedimaléimide, le triallylcyanurate, le polybutadiène liquide, le triméthylolpropane-N,N'-m-phénylènemaléimide, le N-méthyl-N,N'-m-phénylènedimaléimide, le divinylbenzène, les monomères de méthacrylate polyfonctionnels tels que le diméthacrylate d'éthylèneglycol, le diméthacrylate de diéthylèneglycol, le diméthacrylate de polyéthylèneglycol, le triméthacrylate de triméthylolpropane et le méthacrylate d'allyle, et les monomères de vinyle polyfonctionnels, tels que le butyrate de vinyle et le stéarate de vinyle, en utilisant de préférence le triallylisocyanurate comme coréticulant.

7. Compositions selon l'une quelconque des revendications 1 à 6, **caractérisées en ce que** les compositions contiennent en outre au moins un promoteur de compatibilité comme composant F, le promoteur de compatibilité étant de préférence un copolymère à base d'un copolymère d'α-oléfine-acétate de vinyle comme épine dorsale polymère, qui est fonctionnalisé par des groupes carboxyle, des groupes carbonyle, des atomes d'halogène, des groupes amino, des groupes hydroxy ou des groupes oxazoline, de préférence des groupes carboxyle, le promoteur de compatibilité étant de manière particulièrement préférée obtenu par greffage d'acides monocarboxyliques et/ou dicarboxyliques α,ß-éthyléniquement insaturés ou leurs dérivés sur une épine dorsale en copolymère d'α-oléfine-acétate de vinyle.

8. Compositions selon la revendication 7, **caractérisées en ce qu'**on utilise, comme promoteur de compatibilité F, un promoteur de compatibilité qui est constitué par une combinaison d'au moins une résine phénolique avec au moins un acide de Lewis contenant Cl, de préférence ZnCl₂.

9. Procédé pour la préparation de compositions selon l'une quelconque des revendications 1 à 8 par mélange des composants A, B, C, D, E et F - pour autant qu'ils soient présents dans les compositions.

10. Procédé selon la revendication 9, **caractérisé en ce qu'**on mélange d'abord le composant B avec le composant D et le cas échéant E à des températures inférieures à la température de fusion ou de ramollissement la plus élevée du composant A et on ajoute ensuite en mélangeant le mélange obtenu à un mélange du composant A, qui contient le cas échéant le composant C ainsi que le cas échéant le composant F, chauffé à des températures supérieures à la température de fusion ou de ramollissement la plus élevée du composant A.

11. Procédé pour la préparation d'élastomères thermoplastiques comprenant la réticulation de compositions selon l'une quelconque des revendications 1 à 8 ou préparées selon les revendications 9 ou 10 à des températures supérieures à la température de fusion ou de ramollissement la plus élevée du composant A.

12. Elastomères thermoplastiques pouvant être obtenus par réticulation de compositions selon l'une quelconque des revendications 1 à 8.

13. Elastomères thermoplastiques, contenant
a) 10 à < 30% en poids d' au moins un polyamide comme composant A ;
b) > 50 à 90% en poids d'au moins un copolymère d'α-oléfine-acétate de vinyle, qui est réticulé par au moins un initiateur de réticulation par voie radicalaire, le cas échéant en combinaison avec au moins un coréticulant, comme composant B ;
c) 0 à 20% en poids de matières de charge, de plastifiants, d'additifs et/ou d'adjuvants comme composant C ;
la somme des composants A, B et C valant 100% en poids.

14. Utilisation de compositions selon l'une quelconque des revendications 1 à 8 pour la préparation d'élastomères thermoplastiques.

15. Utilisation d'élastomères thermoplastiques selon la revendication 12 ou 13 pour la préparation de pièces moulées, de préférence de courroies, de joints d'étanchéité, de manchettes, de flexibles, de membranes, d'amortisseurs, de profilés ou de gaines de câbles, d'adhésifs fusibles, de feuilles ou pour la coextrusion de matériau synthétique-caoutchouc ou pour le comoulage par injection de pièces moulées.

16. Pièces moulées, gaines de câble, adhésifs fusibles ou feuilles contenant des élastomères thermoplastiques selon l'une quelconque des revendications 12 à 13.
